Europäisches Patentamt

European Patent Office

Office européen des brevets

(11) Publication number: **0 176 934**
**B1**

# (12) EUROPEAN PATENT SPECIFICATION

(45) Date of publication of patent specification: **12.10.88**

(21) Application number: **85112100.4**

(22) Date of filing: **24.09.85**

(51) Int. Cl.⁴: **F 16 C 7/02, B 60 K 5/12**

(54) **Anchoring connecting rod in an engine suspension.**

(30) Priority: **04.10.84 IT 2299584**

(43) Date of publication of application:
**09.04.86 Bulletin 86/15**

(45) Publication of the grant of the patent:
**12.10.88 Bulletin 88/41**

(84) Designated Contracting States:
**DE FR GB**

(56) References cited:
**DE-A-1 575 489**
**DE-B-1 210 263**
**FR-A-1 596 918**
**FR-A-2 292 153**
**GB-A-1 418 823**
**US-A-1 770 644**
**US-A-3 338 113**

(73) Proprietor: **INDUSTRIE PIRELLI S.p.A.**
**Piazzale Cadorna, 5**
**I-20123 Milan (IT)**

(72) Inventor: **Calcagno, Benedetto**
**Via Lario 21**
**Milan (IT)**

(74) Representative: **Mariani, Giorgio, Dr. et al**
**INDUSTRIE PIRELLI S.p.A. Direzione Brevetti**
**Piazzale Cadorna, 5**
**I-20123 Milano (IT)**

## Description

The present invention is directed to an anchoring connecting rod in an engine suspension and more particularly to some improvements in the connecting rods of the double hinge type used for anchoring the motor-driven propeller unit to the car body.

As known the motor unit in a motor vehicle is suitably supported for reducing or eliminating the transmission of vibrations during the running. Generally, the supporting means comprise a connection with springs or similar means between the engine and the car body and according to some embodiments a further connection through a connecting rod between the car body and the engine. On its turn the connecting rod comprises at its ends two seats for housing two elastic elements apt to create hinged connections.

The elastic elements are also known as bushings. Each bushing substantially comprises two sleeves of metallic or like rigid material, between which there is interposed a layer of elastomeric material. The two sleeves are connected respectively to a pin and to a fixed structure with respect to the possible oscillations to which the pin is subjected so as to oblige the elastomeric material to absorb the stresses acting on the pin.

The vibrations occuring during the various running conditions of the vehicle, both for unevenness of the road and for the torque variations acting on the engine, turn into considerable stresses on the connecting rod between the engine and the car body.

Therefore said connecting rod is subjected to tensile and compressive stresses with values of the order of some hundreds of kilograms and over.

In some solution said connecting rods are formed by a steel tube at the ends of which there are arranged the above cited bushings. This solution can be unsatisfactory in some applications since the weight of the connecting rod determines a proper frequency very near that of the vibrations absorbed by the system, with the result of transmitting unacceptable noises.

A known solution for overcoming the above cited drawback according to GB—A—1.418.823 consists of using connecting rods of plastic material, so as to reduce the total weight of the connecting rod and consequently the proper frequency toward high values such as to avoid the cited noise phenomena. However, a solution of this type could also be unsatisfactory since not suitable to the realization of a structure able to guarantee a sufficient mechanical resistance in presence of tensile and compressive stresses that can reach 500 kilograms and over.

Of course it is possible to think to a solution with a structure suitable to withstand the stresses occuring in use, making recourse to a plastic material. But unfortunately the recourse to a particular geometric structure of the connecting rod of a plastic material is not completely obvious both owing to the difficulty in realizing an adequate geometry and for the fact that due to its nature the injection processes of the plastic materials produce some drawbacks. In fact, the same injection process, to which recourse must be made to realize such articles on industrial scale produces the drawback of an excessive shrinkage of the material in consequence of the cooling after the injection.

In consequence of said shrinkage, stresses occur such as to vary the geometry chosen at the beginning with consequent drawbacks deriving from inaccuracies of assembling among the parts and from possible risks of fatigue yielding.

Therefore the aim of the present invention is that of providing a connecting rod suitable for constituting a support for a motor-driven propeller unit to a car body that permits simultaneously of moving the proper frequencies toward values that are not noticed during the vehicle run and that is such as to guarantee an adequate resistance in presence of stresses occuring both in use and in the manufacturing process in order to guarantee the wished resistance in presence of compressive and/or tensile stresses during the assembling operation.

The object of the present invention is a connecting rod for connecting a motor-driven propeller unit to a car body, comprising a plastic material structure at the ends of which there are obtained two seats for housing corresponding hinged elastic elements, said structure comprising between the two seats, a central core substantially directed on a plane perpendicular to the axis of rotation of at least one of said elastic elements and two flanges, an upper and a lower one respectively, transversally directed at both sides of the core, said connecting rod being characterized by the fact of comprising means for maintaining unchanged the distance between the two flanges under stresses and for uniformly sharing the load transmitted between said elastic elements and the structure, said means comprising two ribs, a first and a second one, projecting from each side of the core, each rib being formed by a plurality of diagonals whose ends alternatively connect the said two flanges, the diagonals arranged at one side of the core, being inclined with respect to the diagonals of the opposite side.

The present invention will be better understood by the following detailed description made by way of non limiting example with reference to the figures of the accompanying sheets of drawing in which:

— figures 1 and 2 show a front and a top view of a motor-driven propeller unit with the bearing system to the car body;

— figure 3 is a lateral view of the connecting rod according to the invention;

— figure 3a shows some partial particulars of figure 3;

— figure 4 shows a section along the line IV—IV of figure 3;

— figure 5 shows a section along the line V—V of figure 3;

— figure 6 is a top view of the connecting rod of figure 3;

— figure 7 shows a section along the line VII—VII of figure 6;

— figure 8 is a scheme made by way of example of a possible deformation of a structure forming the connecting rod devoid of the characteristics of the invention;

— figure 9 shows the means for providing an improvement to the housing seat of one of the connecting rod bushings;

— figures 10, 11 and 12, 13 are longitudinal and top views of further partial embodiments of the invention.

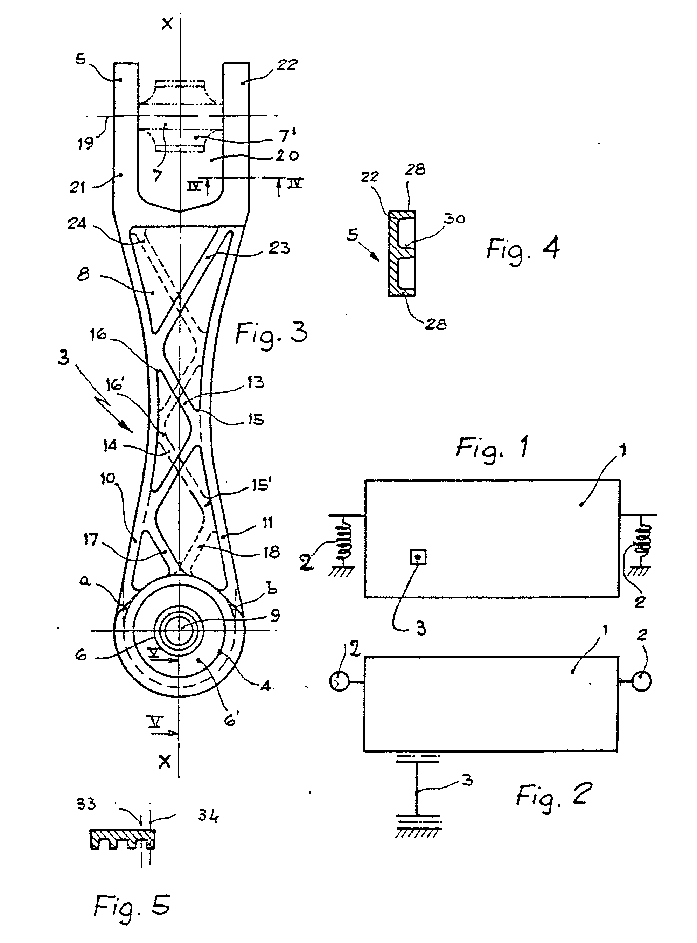

Figures 1 and 2 show with reference numeral 1 a motor-driven propeller unit connected to the car body through springs 2 and a connecting rod 3.

The connecting rod 3 of plastic material, preferably of polyamide resins reinforced with mineral fibers, comprises at its ends two seats 4, 5 for housing corresponding elastic elements or bushings 6, 7.

The elastic element 6 comprises, according to known solutions, two metallic concentric sleeves between which there is interposed an elastomeric layer 6'.

As it has been indicated with a broken line in figure 3, the elastic element 7 comprises also two concentric sleeves between which there is interposed an elastomeric layer 7'.

The axes of the two bushings are on a plane perpendicular to the sheet and on the same plane as the sheet, respectively.

The connecting rod 3 comprises a resistant structure disposed between the two seats 4, 5 which is formed by a central core 8 that lies on a plane perpendicular to the axis 9 of the elastic element 6 and two flanges 10, 11, an upper and a lower one respectively, transversally directed at both sides of the core.

According to its most general embodiment, the connecting rod comprises means for maintaining unchanged the distance between the two flanges 10 and 11 under any type of stress and also means apt to determine a uniform division of the load transmitted between the bushings and the connecting rod structure.

In particular said means comprise two ribs, a first and a second one, that project from each side of the core.

Each rib is formed by a plurality of diagonals 13, 14 whose ends 15, 16 and 15', 16' connect alternatively the two flanges; the diagonals 13 of one side of the core are inclined with respect to the 14 ones relative to the opposite side.

According to a preferred embodiment, the housing seat 4 on the left side of figure 3 has a cylindrical inner contour, while the housing seat 5 on the right side of figure 3 has a substantially U shape.

As shown in the same figures, in this embodiment the furthermost diagonals, respectively 17 and 18, are directed on an intermediate point between the transversal flanges 10, 11 in order to make more uniform the transmissions of the load between the bushings and the structure of the connecting rod.

As said, in the embodiment of figure 3, the housing seat 5 has a substantially U shape in order to receive a bushing 7 whose axis of rotation 19 is contained in the same plane on which the central core 8 lies.

The U-shaped seat is substantially constituted by two plates 21 and 22 directed on two planes perpendicular to the plane on which the central core 8 lies.

Also, in order to make uniform the shearing of the load between the bushing 7 and the structure of the connecting rod, the furthermost diagonals 23, 24 belonging to the ribs that are disposed on opposite sides with respect to the central core, are connected to the plates 21, 22 of the U-shaped seat.

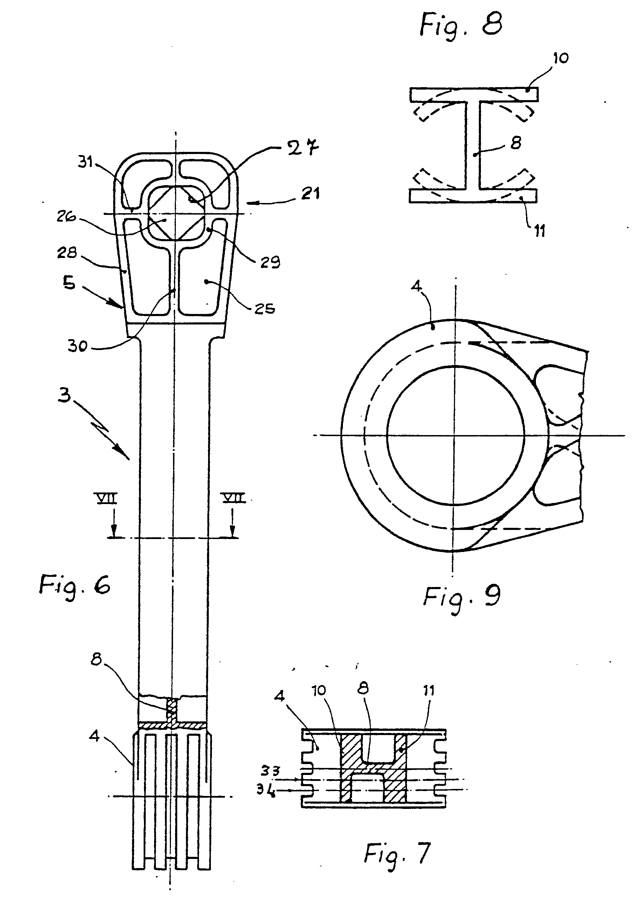

On its turn each plate (figure 6) comprises starting from the inside toward the outside, a substantially flat first part 25, a through hole 26 at the center of the plate, a first rib 28 projecting from the flat part to delimit the contour, a second rib 29 of the same height as the first one of polygonal shape arranged around the hole, further ribs 30, 31 apt to transmit the load from the bushing toward the plates, perpendicular to each other and extending between the first and the second rib 28, 29.

Preferably, the connecting rod is characterized by the fact of comprising a core 8 having a path which increases gradually from the center toward the end so as to constitute a particularly resistant section in proximity of the part nearest the transmission of the load between the bushing and the bearing structure of the connecting rod.

In particular, the figure 3a stresses the increasing of the section of the seat forming the housing for the bushing 6.

As shown, both the thickness $S_1$ in correspondence of the portion defined by the plane X—X and the thickness $S_2$ in correspondence of the tangent point of the outer surface of the flanges with the outer surface of the contour of the housing seat 4 have values different from each other; preferably the ratio between $S_1$ and $S_2$ is substantially that which can be obtained from the values shown in figure 3a.

In a further solution, shown in the figures 5 and 7, along the transversal planes 33, 34 following the axis of the seat 4 there are values of the cited ratio equal to 1 alternated to values different from 1.

The invention reaches all the aimed purposes. In fact, the improvements achieved to the effects of the elimation of the noise by moving the proper frequency of the connecting rod out of the noise frequencies, are attributable to the combination in the connecting rod of a plastic material and of the particular geometry used.

In particular the light weight of the connecting rod is not only attributable to the choice of a particular material, but to the fact that said material being per se lighter than metals or than the steel structures usually used, has a plurality of cavities or empty spaces that involve not only the main structure but also the ends, i.e. the seats for the bushings.

For instance in the particular embodiment of figure 3, the light weight of the connecting rod is obtained both making recourse to the formation of empty spaces delimited by triangular areas at both sides of the central core 8 and by the presence of semi-circumferential ribs stressed in the figure 5 and also by the formation of empty spaces on the plates of the seat 5 which are better detailed in the figure 4.

All this has been obtained without jeopardizing the mechanical characteristics of the connecting rod even if the great number of cavities and empty spaces did not permit to foresee the optimal results achieved.

The explanation of the satisfactory behaviour of the connecting rod subjected to stresses of various type can be the following one.

During the manufacturing processes with injection moulding techniques, the shrinkage stresses due to the cooling of the material, do not give rise to deformations that alter the wished geometry of the resistant structure.

In fact, any possible tendency of the flanges 10, 11 to change their distance in consequence of the shrinkage of the plastic material is strongly opposed by the bond imposed by the diagonals that connect alternatively in series the upper flange to the lower flange.

Moreover the same presence in the connecting rod of the cavities distributed in all its resistant parts, reducing the total volume of the used material, produces per se a limiting condition as regards the intensity of the shrinkage stresses which could occur.

Moreover, the particular distribution of the diagonals that cross the one with the other remaining spaced in consequence of the interposition of the central core 8 (figure 3) is a positive fact.

This circumstance permits to limit the height of the rib forming the diagonals projecting from the central core reducing therefore the contractions due to the shrinkage and facilitating the release of the piece from the forming mould.

Therefore, it is evident from the foregoing that the shrinkage of the material due to the used injection technique does not alter the structure pre-determined for withstanding the service stresses. Then, looking at the improvements achieved in consequence of the resistance to the stresses during the working conditions, the triangular structure defined by the diagonals disposed at both sides with regard to the central core offers the maximum possible stability in absorbing the loads transmitted between the bushing and the connecting rod.

The uniformity of the stresses transmitted to the connecting rod is optimized by the fact that, as shown in the figure 3 the furthermost diagonals 17, 18 and 23, 24 terminate at the points where the loads transmitted from the bushing to the bearing structure of the connecting rod concentrate.

Therefore the flanges, the central core and also the diagonals disposed at both sides of the core take part in the transmission of the stress between the bushing and the connecting rod.

Also the presence of the ribs forming the diagonals has permitted to overcome all the drawbacks that could occur during the various cycles of tensile and compressive stresses on the connecting rod and that could define a certain buckling of the flanges when said flanges are very wide.

In fact, it has been noticed that in heavy load conditions the flanges not reinforced by the diagonals should have the tendency to take the path that is indicated with a broken line in the figure 8.

In practice the presence of the ribs forming diagonals originates a kind of bond between the flanges opposing once again any tendency to a possible moving away from the most suitable shape for withstanding the transmission of loads.

Further, the particular solution used for the seat 4 of the bushing is a positive fact for the purposes of the invention.

In fact, a certain ovalization of the seat should occur during the transmission of the stresses, for instance in consequence of a high tensile load from the pin of the bushing 6 toward the connecting rod; following said ovalization the points a and b shown in figure 3 could get near as they were subjected to a bending condition, with the consequent risk of breaking especially in presence of repeated cycles.

The Applicant has found in a preferred solution that it is possible to avoid said risk by conveniently modifying the seat for housing the bushing.

In other words, the improved solution consists of changing the thickness of the seat contour as shown in the figure 9 passing from the geometry indicated with a broken line to the one drawn with a continuous line and following a ratio of thicknesses $S_1/S_2$ with $S_2>S_1$.

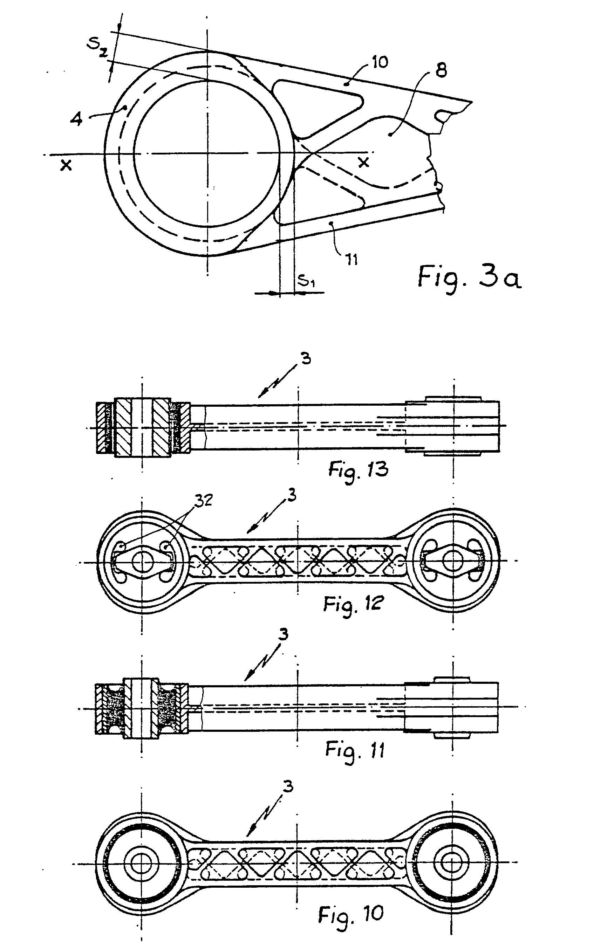

Although some particular advantageous embodiments of the invention have been described, it is understood that the present invention includes in its scope any other alternative embodiments accessible to the technicians of the field; for instance figures 10 to 13 show further embodiments in which a connecting rod provided with a resistant structure as said above, comprises at its own ends bushings, both with a cylindrical contour, i.e. they are suitable to receive sleeves having axes parallel to one another.

More particularly the solution shown in figures 10 and 11 foresee the forced insertion of elastic elements into the end holes with outer surfaces of plastic material too.

The solution of figures 12, 13 comprises also the direct moulding of the rubber on the connecting rod; such a solution is preferred in particular when the end elastic element has elasticity dissymetries in the form of slots 32 so that it is not necessary to provide pre-stressed pieces.

## Claims

1. Connecting rod (3) for connecting a motor-driven propeller unit to a car body, comprising a plastic material structure at the ends of which there are obtained two seats (4, 5) for housing corresponding hinged elastic elements (6, 7), said structure comprising between the two seats, a central core (8) substantially directed on a plane perpendicular to the axis (9) of rotation of at least one of said elastic elements and two flanges (10, 11), an upper and a lower one respectively, transversally directed at both sides of the core, said connecting rod being characterized by the fact of comprising means for maintaining unchanged the distance between the two flanges under stresses and for uniformly sharing the load transmitted between said elastic elements and the structure, said means comprising two ribs, a first and a second one, projecting from each side of the core (8), each rib being formed by a plurality of diagonals (13, 14) whose ends (15, 16) alternatively connect the said two flanges (10, 11), the diagonals (13) arranged at one side of the core, being inclined with respect to the diagonals (14) of the opposite side.

2. Connecting rod as in Claim 1, characterized by the fact that one of the two seats comprises an elastic element whose axis (9) is perpendicular to the plane containing the central core (8) and is connected to the furthermost diagonals (17, 18) at an intermediate point between the two transversal flanges (10, 11).

3. Connecting rod as in any one of the preceding Claims, characterized by the fact that one the two housing seats (5) comprises an elastic element (7) whose axis (19) is defined by the same plane on which the central core (8) lies.

4. Connecting rod as in Claim 3, characterized by the fact that said housing seat (5) has a U-shape (20) and on the flanges of the U there are two plates (21, 22) directed on two planes perpendicular to the plane on which there is the central core (8) of the structure.

5. Connecting rod as in claim 4, characterized by the fact that the two furthermost diagonals (23, 24) of the ribs which are disposed on opposite sides with respect to the central core forming the structure of the connecting rod, are connected to the flanges (21, 22) of the U-shaped housing seat.

6. Connecting rod as in Claim 5, characterized by the fact that each flange of the U which is in the form of a plate (21, 22) comprises respectively from the inside toward the outside, a first flat part (25), a through hole (26) defined at the center by a polygonal contour (27), a rib projecting from the flat part for defining the lip of said plate, a further polygonal rib (29) of the same height as the first one, further ribs (30, 31) perpendicular to one another extended between the rib defining the lip and the polygonal rib around the hole.

7. Connecting rod as in any one of the preceding Claims, characterized by the fact that the distance between the flanges of the central core (8) increases gradually from the center toward the housing seats.

8. Connecting rod as in Claim 1, characterized by the fact that in one housing seat comprising an inner cylindrical contour, the value of the thickness $S_1$ of the seat along the central plane (X—X) perpendicular to the core (8) is lower than the value of the thickness $S_2$ of the seat in correspondence of the tangency point between the outer profile of the flanges (10, 11) and the outer surface of the seat itself.

9. Connecting rod as in Claim 8, characterized by the fact that the transversal sections of said seat comprising said ratio values between the thicknesses are alternatively followed by transversal sections in which the cited ratio is equal to 1.

## Patentansprüche

1. Stützstange (3) zum Verbinden einer motorgetriebenen Drehflügeleinheit mit einem Fahrzeugkörper, umfassend ein Gebilde aus Kunststoffmaterial, an dessen Ende zwei Sitze (4, 5) zum Aufnehmen von entsprechenden angelenkten elastischen Elementen (6, 7) vorgesehen sind, wobei das Gebilde zwischen den beiden Sitzen einen mittleren Kern (8), der im wesentlichen in einer Ebene rechtwinklig zur Drehachse (9) wenigstens eines der elastischen Elemente liegt und zwei Flansche (10, 11) aufweist, nämlich einen oberen und einen unteren Flansch, die an beiden Seiten des Kerns quer gerichtet sind, dadurch gekennzeichnet, daß die Stützstange Mittel aufweist, um den Abstand zwischen den beiden Flanschen unter Beanspruchungen unverändert zu halten, und um die Last gleichmäßig zu verteilen, die zwischen den elastischen Elementen und dem Gebilde übertragen wird, die genannten Mittel zwei Rippen, eine erste und ein zweite Rippe, umfassen, die von jeder Seite des Kerns (8) vorragen, jede Rippe durch eine Mehrzahl von Diagonalen (13, 14) gebildet ist, deren Enden (15, 16) abwechselnd die beiden Flansche (10, 11) anschließen, wobei die auf einer Seite des Kerns angeordneten Diagonalen (13) mit Bezug auf die Diagonalen (14) der gegenüberliegenden Seite schräg verlaufen.

2. Stützstange nach Anspruch 1, dadurch gekennzeichnet, daß einer der beiden Sitze ein elastisches Element aufweist, dessen Achse (9) rechtwinklig zu der den mittleren Kern (8) enthaltenden Ebene verläuft und mit den weitesten Diagonalen (17, 18) an einer Stelle zwischen den beiden Querflanschen (10, 11) verbunden ist.

3. Stützstange nach irgendeinem der vorhergehenden Ansprüche, dadurch gekennzeichnet, daß einer der beiden Gehäusesitze (5) ein elastisches Element (7) aufweist, dessen Achse (19) durch die gleiche Ebene definiert ist, auf welcher der mittlere Kern (8) liegt.

4. Stützstange nach Anspruch 3, dadurch gekennzeichnet, daß der Gehäusesitz (5) U-Gestalt (20) hat, und an den Flanschen des U zwei Platten (21, 22) vorgesehen sind, die in zwei Ebenen rechtwinklig zu der Ebene liegen, in welcher der mittlere Kern (8) des Gebildes liegt.

5. Stützstange nach Anspruch 4, dadurch gekennzeichnet, daß die beiden weitesten Diagonalen (23, 24) der Rippen, die mit Bezug auf den das Gebilde der Stützstange bildenden mittleren Kern auf gegenüberliegenden Seiten angeordnet sind, mit den Flanschen (21, 22) des U-förmigen Gehäusesitzes verbunden sind.

6. Stützstange nach Anspruch 5, dadurch gekennzeichnet, daß jeder Flansch des U, der in Form einer Platte (21, 22) vorhanden ist, jeweils von innen nach außen einen ersten ebenen Teil (25), ein Durchgangsloch (26), welches an der Mitte durch einen vieleckigen Umriß (27) definiert ist, eine Rippe, die von dem ebenen Teil vorragt, um die Lippe der Platte zu bilden, eine weitere vieleckige Rippe (29) mit der gleichen Höhe wie die erste Rippe, und weitere Rippen (30, 31) aufweist, die sich rechtwinklig zueinander zwischen der Rippe, welche die Lippe bildet, und der vieleckigen Rippe rund um das Loch erstrecken.

7. Stützstange nach irgendeinem der vorhergehenden Ansprüche, dadurch gekennzeichnet, daß der Abstand zwischen den Flanschen des mittleren Kerns (8) sich allmählich von der Mitte in Richtung gegen die Gehäusesitze vergrößert.

8. Stützstange nach Anspruch 1, dadurch gekennzeichnet, daß in einem Gehäusesitz, der einen inneren zylindrischen Umriß hat, der Wert der Dicke $S_1$ des Sitzes entlang der mittleren Ebene (X—X) rechtwinklig zu dem Kern (8) geringer ist als der Wert der Dicke $S_2$ des Sitzes am Tangentenpunkt zwischen dem äußeren Profil der Flansche (10, 11) und der Außenfläche des Sitzes selbst.

9. Stützstange nach Anspruch 8, dadurch gekennzeichnet, daß den querverlaufenden Abschnitten des Sitzes, welche die genannten Verhältniswerte zwischen den Dicken aufweisen, abwechselnd querverlaufende Abschnitte folgen, in denen das genannte Verhältnis gleich 1 ist.

**Revendications**

1. Tige de liaison (3) pour relier un groupe de propulsion entraîné par moteur à un châssis de véhicule, comprenant une structure en matière plastique aux extrémités de laquelle sont formés deux sièges (4, 5) pour recevoir des éléments élastiques articulés (6, 7) en correspondance, ladite structure comprenant, entre les deux sièges, une âme centrale (8) placée sensiblement dans un plan perpendiculaire à l'axe de rotation d'au moins un desdits éléments élastiques et deux ailes (10, 11), à savoir une aile supérieure et une aile inférieure, orientées transversalement sur les deux côtés de l'âme, ladite tige de liaison étant caractérisée par le fait qu'elle comprend des moyens pour maintenir inchangée la distance entre les deux ailes soumises à des contraintes et pour répartir uniformément la charge transmise entre lesdits éléments élastiques et la structure, lesdits moyens comprenant deux nervures, à savoir une première et une seconde nervure, faisant saillie de chaque côté de l'âme (8), chaque nervure étant formée par une pluralité de diagonales (13, 14) dont les extrémités (15, 16) sont reliées alternativement avec les deux ailes précitées (10, 11), les diagonales (13) étant disposées sur un côté de l'âme en étant inclinées par rapport aux diagonales (14) du côté opposé.

2. Tige de liaison selon la revendication 1, caractérisée par le fait qu'un des deux sièges comprend un élément élastique dont l'axe (9) est perpendiculaire au plan contenant l'âme centrale (8) et est relié aux diagonales les plus éloignées (17, 18) en un point intermédiaire situé entre les deux ailes transversales (10, 11).

3. Tige de liaison selon une quelconque des revendications précédentes, caractérisée par le fait qu'un des deux sièges récepteurs (5) comprend un élément élastique (7) dont l'axe (19) est défini par le même plan que celui dans lequel est située l'âme centrale (8).

4. Tige de liaison selon la revendication 3, caractérisée par le fait que ledit siège récepteur (5) a une forme de U (20) et en ce qu'il est prévu sur les deux branches du U deux plaques (21, 22) dirigées dans deux plans perpendiculaires au plan dans lequel est située l'âme centrale (8) de la structure.

5. Tige de liaison selon la revendication 4, caractérisée par le fait que les deux diagonales les plus éloignées (23, 24) des nervures, qui sont disposées sur des côtés opposés par rapport à l'âme centrale formant la structure de la tige de liaison, sont reliées aux ailes (21, 22) du siège récepteur en forme de U.

6. Tige de liaison selon la revendication 5, caractérisée par le fait que chaque branche du U, qui se présente sous la forme d'une plaque (21, 22), comprend respectivement, de l'intérieur vers l'extérieur, une première partie plane (25), un trou de traversée (26) défini au centre par un contour polygonal (27), une nervure faisant saillie de la partie plane pour définir le rebord de ladite plaque, une autre nervure polygonale (29) de la même hauteur que la première nervure, d'autres nervures (30, 31) perpendiculaires entre elles et s'étendant entre la nervure définissant le rebord et la nervure polygonale entourant le trou.

7. Tige de liaison selon une quelconque des revendications précédentes, caractérisée par le fait que la distance entre les ailes de l'âme centrale (8) augmentent graduellement du centre vers les sièges récepteurs.

8. Tige de liaison selon la revendication 1, caractérisée par le fait que, dans un siège récepteur comprenant un contour cylindrique intérieur, la valeur de l'épaisseur $S_1$ du siège le long du plan central (X—X) perpendiculaire à l'âme (8) est inférieure à la valeur de l'épaisseur $S_2$ du siège en correspondance au point de tangence entre le profil extérieur des ailes (10, 11) et la surface extérieure du siège proprement dit.

9. Tige de liaison selon la revendication 8, caractérisée par le fait que les sections transver-

0 176 934

sales dudit siège comprenant lesdites valeurs du rapport entre les épaisseurs, sont alternativement suivies par des sections transversales dans lesquelles le rapport cité est égal à 1.

Fig. 3

Fig. 4

Fig. 1

Fig. 2

Fig. 5

1

Fig. 8

Fig. 6

Fig. 9

Fig. 7

Fig. 3a

Fig. 13

Fig. 12

Fig. 11

Fig. 10